# EUROPEAN PATENT APPLICATION

(11) **EP 1 777 537 A2**
(43) Date of publication of application: **25.04.2007**
(21) Application number: 06021230.5
(22) Date of filing: 10.10.2006
(51) Int. Cl.: G01S 1/00

(54) **Positioning apparatus, control method of positioning apparatus, control program for positioning apparatus, and computer readable recording medium for storing control program for positioning apparatus**

(30) Priority: 11.10.2005 JP 2005296769
(71) Applicant: SEIKO EPSON CORPORATION, Shinjuku-ku, Tokyo 163-0811 (JP)
(72) Inventor: Gobara, Noaki, Suwa-shi, Nagano-ken 392-8502 (JP)
(74) Representative: HOFFMANN EITLE

(57) **Abstract**

A positioning apparatus for positioning based on satellite signals from positioning satellites includes: correlation information generating means for generating correlation information which indicates correlation values between the satellite signals and correlation purpose signals stored in the positioning apparatus; correlation information evaluating means for determining whether or not variation in the correlation values falls within a predetermined normal variation range; multipath determining means for determining whether or not the satellite signals are affected by a multipath based on determination results of the correlation information evaluating means; multipath correcting information generating means for generating multipath correcting information to correct effects of the multipath based on determination results of the multipath determining means and the correlation information; and correlation value correcting means for correcting the correlation values based on the multipath correcting information.

## Description

### BACKGROUND

### 1. Technical Field

The present invention relates to a positioning apparatus for positioning based on signals from positioning satellites, a control method of the positioning apparatus, a control program for the positioning apparatus, and a computer readable recording medium for storing the control program for the positioning apparatus.

### 2. Related Art

Conventionally, positioning systems for positioning a current position of each GPS (Global Positioning System) receiver using a satellite navigation system such as GPS have been used.

Such GPS receiver receives, for example, signal radio waves from three or more of GPS satellites, and calculates correlation peak value (Code Phase) of C/A (Clear and Acquisition or Coarse and Access) codes put on the signal radio waves. The difference (hereinafter, referred to as delay time) between the time at which the C/A codes are transmitted from each GPS satellite and the time at which they are received by the GPS receiver is calculated and the distance (hereinafter, referred to as pseudo range) between each GPS satellite and the GPS receiver is calculated. The GPS receiver then positions the current position of the GPS receiver using a position of each GPS satellite on the satellite orbit and the aforementioned pseudo range.

However, the GPS receiver may receive radio waves in the state where an indirect wave (hereinafter, referred to as multipath) which is generated when radio waves from the GPS satellites reflect off of a building and the like, interferes with a direct wave. The multipath reflects off of a building and the like, causing a delay in arrival at the GPS receiver. There is a problem that interference of the multipath with the direct wave causes deviation in the correlation peak value, and significant error in positioning.

On the other hand, it is well known that a narrow correlator for performing further precise correlation processing than one chip of C/A code is effective.

However, although the bandwidth for capturing signal components must be reduced in order to increase the sensitivity (S/N ratio), there is a problem that the narrow correlator is not effective since the narrower the bandwidth, the rounder the signal waveform.

Therefore, a technology to determine multipaths by comparing modeled signals and actually received signals (e.g., US6868110B2).

However, there are problems that it is very difficult to model signal waveforms, especially, it is difficult to determine multipaths since signal waveforms cannot be generated to perfection when signal intensity is weak, and it is also difficult to correct mutlipaths.

### SUMMARY

Therefore, an advantage of some aspects of the invention is to provide a positioning apparatus capable of determining multipaths even when signal intensity is weak, a control method of the positioning apparatus, a control program for the positioning apparatus, and a computer readable recording medium for storing the control program for the positioning apparatus.

In order to achieve the above object, a positioning apparatus for positioning based on satellite signals from positioning satellites according to a first aspect of the invention includes: correlation information generating means for generating correlation information which indicates correlation values between the satellite signals and correlation purpose signals stored in the positioning apparatus; correlation information evaluating means for determining whether or not variation in the correlation values falls within a predetermined normal variation range; multipath determining means for determining whether or not the satellite signals are affected by a multipath based on determination results of the correlation information evaluating means; multipath correcting information generating means for generating multipath correcting information to correct effects of the multipath based on determination results of the multipath determining means and the correlation information; and correlation value correcting means for correcting the correlation values based on the multipath correcting information.

With the structure according to the first aspect of the invention, the positioning apparatus can determine whether or not the satellite signals are affected by a multipath using the multipath determining means by determining whether or not variation in the correlation values falls within a predetermined normal variation range.

In addition, the positioning apparatus can generate the multipath correcting information using the multipath correcting information generating means, and correct the correlation values using the correlation value correcting means.

Here, the terminal can determine whether or not variation in the correlation values falls within the normal variation range even when signal waveforms of the correlation values are round, allowing increase in sensitivity by reducing bandwidth even when satellite signal intensity is weak.

Accordingly, it is possible to determine a multipath even when signal intensity is weak, and it is also possible to correct the multipath.

A second aspect of the invention is a positioning apparatus with a structure according to the first aspect of the invention, wherein the correlation values include code phase values and peak electric power values, and the multipath determining means evaluates variation in the code phase values and that in the peak electric power values, respectively, and determines that the satellite signals are affected by a multipath when both of the code phase values and the peak electric power values do not fall within the normal variation range.

With the structure according to the second aspect of the invention, it is possible to reliably determine whether or not the satellite signals are affected by a multipath.

A third aspect of the invention is a positioning apparatus with the structure according to any of the first and the second aspect of the invention, which includes interference cycle determining means for determining an interference cycle in which the multipath interferes with the satellite signals, wherein the multipath correcting information generating means generates the multipath correcting information based on the correlation information in the interference cycle.

With the structure according to the third aspect of the invention, the positioning apparatus can generate the multipath correcting information for sufficient time periods using the interference cycle determining means.

In order to achieve the above obj ect, a control method of a positioning apparatus according to a fourth aspect of the invention includes the steps of: generating correlation information which indicates correlation values between satellite signals and correlation purpose signals stored in a positioning apparatus by means of the positioning apparatus for positioning based on the satellite signals from positioning satellites;evaluating correlationinformationfor determining whether or not variation in the correlation values falls within a predetermined normal variation range by means of the positioning apparatus; determining multipath for determining whether or not the satellite signals are affected by a multipath by means of the positioning apparatus based on determination results of the step of evaluating correlation information; generating multipath correcting information to correct effects of the multipath by means of the positioning apparatus based on determination results of the multipath determining means and the correlation information; and correcting correlation values for correcting the correlation values by means of the positioning apparatus based on the multipath correcting information.

With the structure according to the fourth aspect of the invention, it is possible to determine a multipath even when signal intensity is weak, and it is also possible to correct the multipath.

In order to achieve the above obj ect, a control program for a positioning apparatus according to a fifth aspect of the invention, instructing a computer to perform the steps of: generating correlation information which indicates correlation values between satellite signals and correlation purpose signals stored in a positioning apparatus by means of the positioning apparatus for positioning based on the satellite signals from positioning satellites; evaluating correlation information for determining whether or not variation in the correlation values falls within a predetermined normal variation range by means of the positioning apparatus; determining multipath for determining whether or not the satellite signals are affected by a multipath by means of the positioning apparatus based on determination results of the step of evaluating correlation information; generating multipath correcting information to correct effects of the multipath by means of the positioning apparatus based on determination results of the multipath determining means and the correlation information; and correcting correlation values for correcting the correlation values by means of the positioning apparatus based on the multipath correcting information.

In order to achieve the above object, a computer readable recording medium for storing a control program for a positioning apparatus according to a sixth aspect of the invention, instructing a computer to perform the steps of: generating correlationinformation which indicates correlation values between satellite signals and correlation purpose signals stored in a positioning apparatus by means of the positioning apparatus for positioning based on the satellite signals from positioning satellites; evaluating correlation information for determining whether or not variation in the correlation values falls within a predetermined normal variation range by means of the positioning apparatus; determining multipath for determining whether or not the satellite signals are affected by a multipath by means of the positioning apparatus based on determination results of the step of evaluating correlation information; generating multipath correcting information to correct effects of the multipath by means of the positioning apparatus based on determination results of the multipath determining means and the correlation information; and correcting correlation values for correcting the correlation values by means of the positioning apparatus based on the multipath correcting information.

### BRIEF DESCRIPTION OF THE DRAWINGS

The invention will be described with reference to the accompanying drawings, wherein like numbers reference like elements.

Fig. 1 schematically shows a terminal and the like in an embodiment according to the invention.

Fig. 2 schematically shows a main hardware structure of the terminal.

Fig. 3 schematically shows a main software structure of the terminal.

Fig. 4 shows an example of integrating information.

Fig. 5 is a diagram for describing a peak CodePhase value evaluating program.

Fig. 6 is a diagram for describing a Power value evaluating program.

Fig. 7 shows simulation results of variation in PC values.

Fig. 8 shows simulation results of variation in P values.

Fig. 9 shows an example of expected line information.

Fig. 10 schematically shows a flowchart of an operation example of the terminal.

Fig. 11 schematically shows a flowchart of an operation example of the terminal.

### DESCRIPTION OF EXEMPLARY EMBODIMENTS

Hereinafter, with reference to the drawings, the preferred exemplary embodiments of the invention will be described in detail.

The following embodiments are given various limitations that are preferable technically because they are the exemplary specific examples of the invention, however, the scope of the invention is not limited to these aspects unless there is a particular description to limit the invention in the following description.

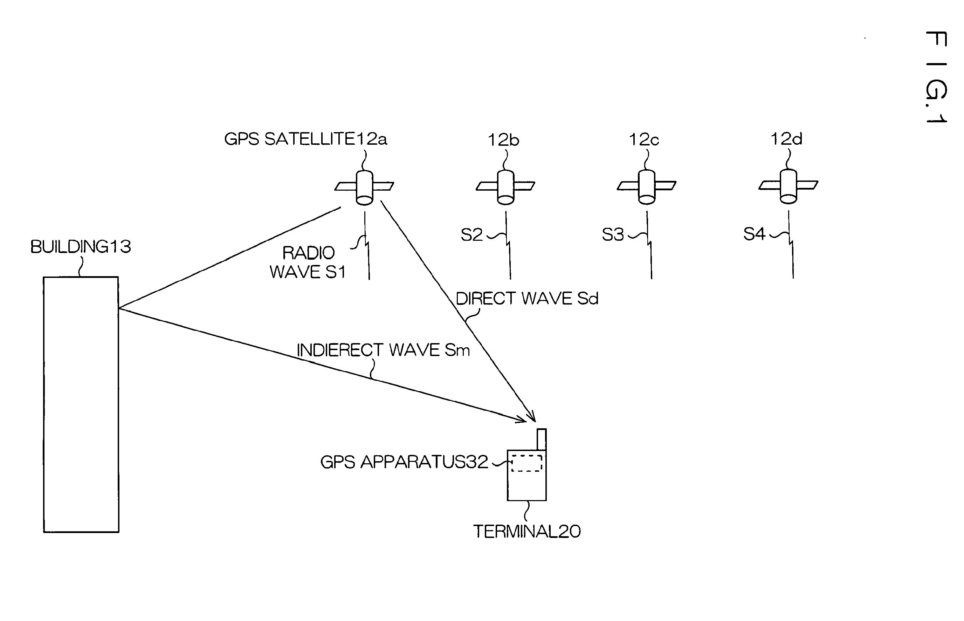

Fig. 1 schematically illustrates a terminal 20 and the like according to an embodiment of the invention.

The terminal 20 is an example of a positioning apparatus.

As illustrated in Fig. 1, the terminal 20 includes a GPS apparatus 32. The terminal 20 can receive radio waves S1 and the like from multiple positioning apparatuses, such as GPS satellites 12a, 12b, 12c, and 12d using the GPS apparatus 32.

Here, the radio wave S1 or the like may be received by the terminal 20 as a direct wave Sd, or as an indirect wave Sm which reflects off of a building 13. The indirect wave Sm is so-called multipath.

When the terminal 20 receives both the direct wave Sd and the indirect wave Sm, the indirect wave Sm interferes with the direct wave Sd.

Each signal is put on the radio waves S1 and the like. One of those signals is a C/A code. The terminal 20 detects the C/A code for positioning. The C/A code is an example of satellite signals.

The terminal 20 can correct deviation in the correlation peak value of the C/A code due to interference of the indirect wave Sm with the direct wave Sd, and thus reduce a positioning error with a structure described below.

The terminal 20 may be, for example, a cellular phone, a PHS (Personal Handy-phone System), PDA (Personal Digital Assistance) or the like, but not limited to these.

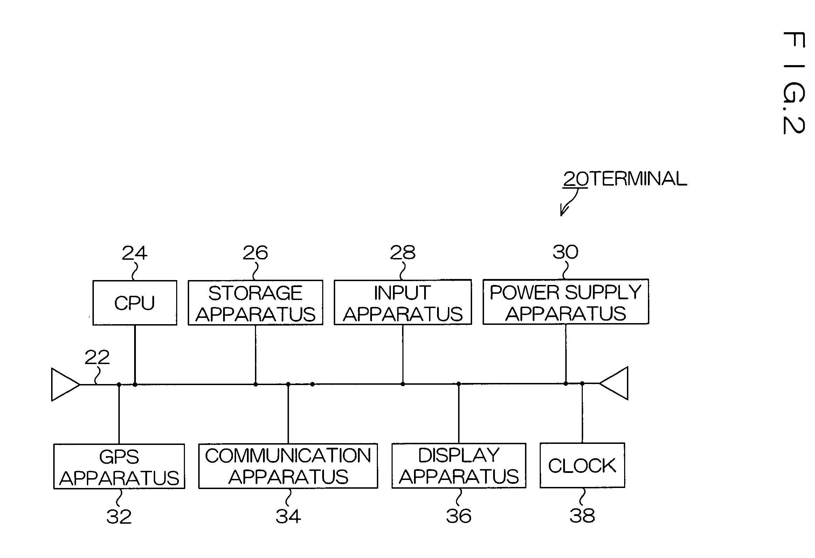

It should be noted that the number of the GPS satellites 12a and the like is not limited to four, but may be three or less, or five or more.
Main Hardware Structure of Terminal 20
Fig. 2 schematically illustrates a main hardware structure of the terminal 20.

As illustrated in Fig. 2, the terminal 20 includes a computer, which is equipped with a bus 22.

A CPU (Central Processing Unit) 24, a storage apparatus 26, and the like are connected with the bus 22. The storage apparatus 26 may be a RAM (Random Access Memory), a ROM (Read Only Memory), or the like.

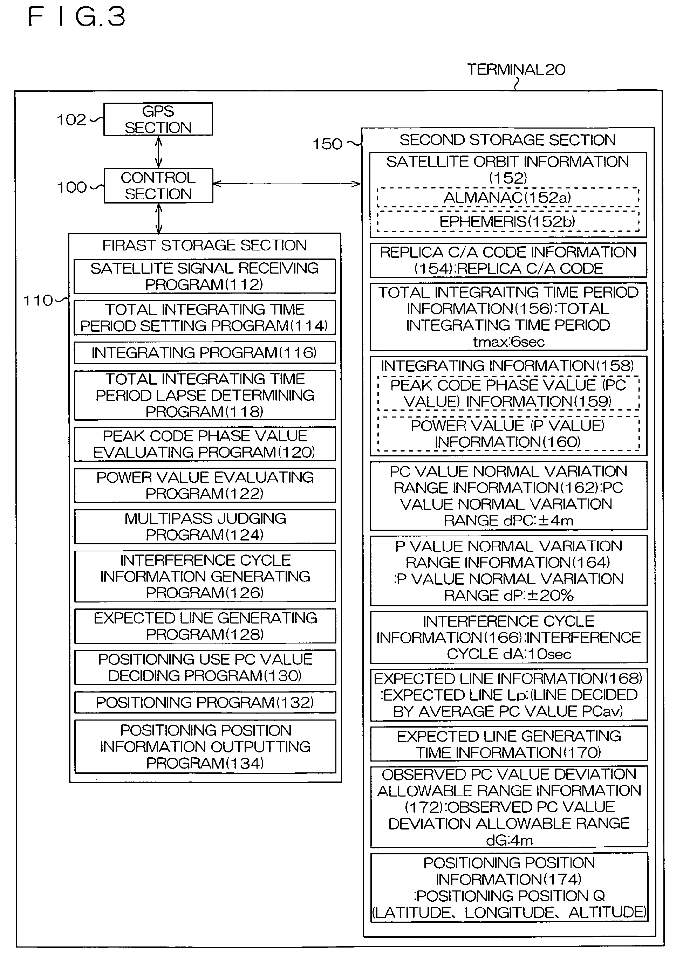

In addition, an input apparatus 28 for entering each piece of information and instructions, a power supply apparatus 30, the GPS apparatus, a communication apparatus 34, a display apparatus 36 for displaying each piece of information, and a clock 38.
Main Software Structure of Terminal 20
Fig. 3 schematically illustrates a main software structure of the terminal 20.

As illustrated in Fig. 3, the terminal 20 has a GPS section 102 corresponding to the GPS apparatus 32 in Fig. 2 and the like.

The terminal 20 also includes a first storage section 110 for storing each program and a second storage section 150 for storing each piece of information.

As illustrated in Fig. 3, the terminal 20 stores satellite orbit information 152 in the second storage section 150. The satellite orbit information 152 includes almanac 152a which indicates rough orbits of all GPS satellites 12a and the like, and ephemeris 152b which indicates accurate orbits of each satellite 12a or the like.

The terminal 20 uses the satellite orbit information 152 for positioning.

As illustrated in Fig. 3, the terminal 20 stores a satellite signal receiving program 112 in the first storage section 110. The satellite signal receiving program 112 is a program that the control section 100 receives the radio waves S1 and the like from the GPS satellites 12a and the like.

The control section 100 determines the GPS satellite 12a or the like which is observable by the almanac 152a at a current position (rough position) and at the current time, and then receives the radio wave S1 or the like from the observable GPS satellite 12a or the like. Here, a positioning position Q to be described later which was calculated at the previous positioning is used as the rough position, for example.

As illustrated in Fig. 3, the terminal 20 stores replica C/A code information 154 in the second storage section 150. The replica C/A code information 154 is information which indicates replica C/A codes corresponding to each of the GPS satellites 12a and the like. Therefore, the terminal 20 has the number of replica C/A codes corresponding to the number of GPS satellites 12a and the like. The replica C/A code is an example of correlation purpose signals.

The terminal 20 correlates the C/A codes put on the radio waves S1 with the like and the replica C/A codes.

As illustrated in Fig. 3, the terminal 20 stores a total integrating time period setting program 114 in the first storage section 110. The total integrating time period setting program 114 is a program that the control section 100 generates total integrating time period information 156 indicating a total integrating time period tmax, which is a total integrating time period using an integrating program 116 to be described later.

The lower the radio wave intensity of the received radio waves S1 and the like, the longer the total integrating time period is set by the control section 100.

The control section 100 stores the total integrating information 156 which indicates, for example, 6 seconds (sec) in the second storage section 150.

As illustrated in Fig. 3, the terminal 20 stores the integrating program 116 in the first storage section 110. The integrating program 116 is a program that the control section 100 generates integrating information 158 which indicates correlation integrating values between the received C/A codes and the replica C/A codes. The integrating information 158 is an example of correlation information. The integrating program 116 and the control section 100 is an example of correlation information generating means.

More specifically, the control section 100 calculates correlation values between the received C/A codes and the replica C/A codes, and integrates the correlation values within, for example, 100 msec (ms), thereby generating the integrating information 158.

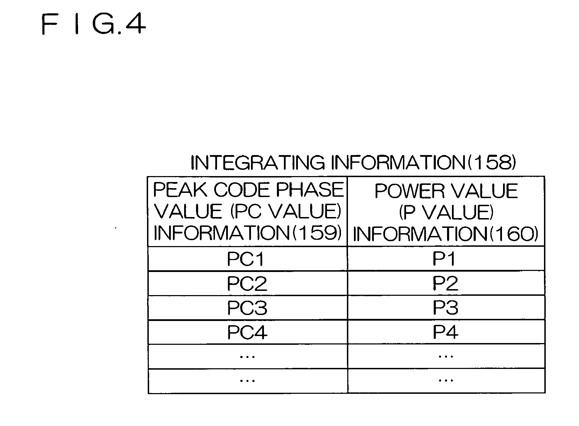

Fig. 4 illustrates an example of the integrating information 158.

As illustrated in Fig. 4, the integrating information 158 includes peak CodePhase value (hereinafter, referred to as PC value) information 159 and Power value (hereinafter, referred to as P value) information 160.

The PC value information 159 is information which indicates phases of the C/A codes when the correlation between the received C/A codes and the replica C/A codes is the maximum.

The P value information 160 is information which indicates electric power values corresponding to the PC value information 159.

The control section 100 calculates PC1, PC2, and the like which configure the PC value information 159 every 100 msec (ms), for example, and calculates respective corresponding electric power values P1, P2, and the like, thereby generating the P value information 160, as illustrated in Fig. 4.

The aforementioned PC values and P values are examples of correlation values.

The control section 100 stores the generated integrating information 158 in the second storage section 150.

As illustrated in Fig. 3, the terminal 20 stores a total integrating time period lapse determining program 118 in the first storage section 110. The total integrating time period lapse determining program 118 is a program that the control section 100 determines whether or not the total integrating time period tmax has elapsed after a processing using the integrating program 116 has started.

As illustrated in Fig. 3, the terminal 20 stores a peak CodePhase value evaluating program 120 in the first storage section 110. The peak CodePhase value evaluating program 120 is a program that the control section 100 determines whether or not variation in PC values indicated in the integrating information 158 falls within a predetermined PC value normal variation range dPC.

The PC value normal variation range dPC is indicated in PC value normal variation range information 162. The PC value normal variation range dPC is an example of normal variation range. The peak CodePhase value evaluating program 120 and the control section 100 is an example of correlation information evaluating means.

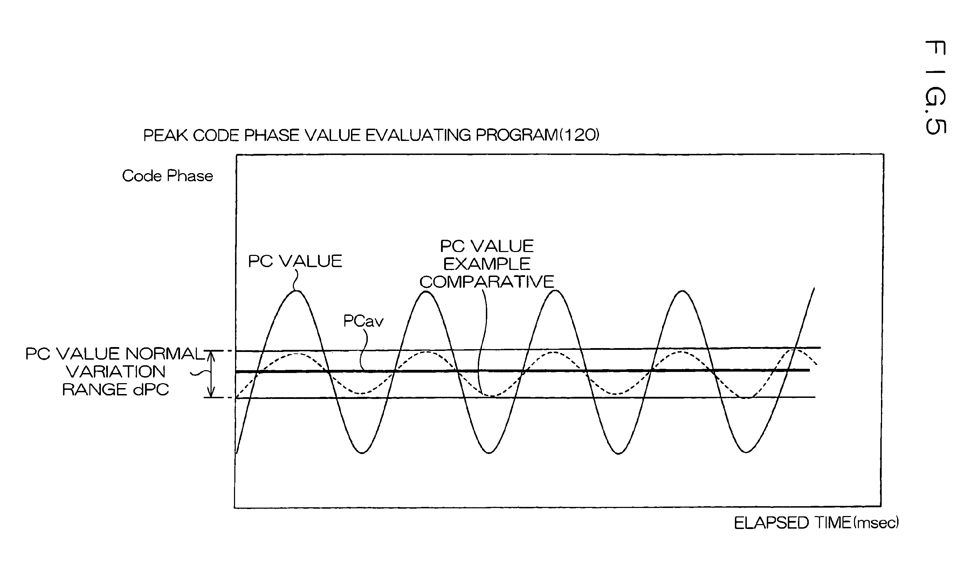

Fig. 5 is a diagram for describing the peak CodePhase value evaluating program 120.

As illustrated in Fig. 5, the control section 100 determines whether or not variation in PC values falls within the PC value normal variation range dPC. When variation in PC values does not fall within the PC value normal variation range dPC as indicated by a solid line in Fig. 5, the control section 100 determines that variation in PC values does not fall within the PC value normal variation range dPC.

On the other hand, when variation in PC values falls within the PC value normal variation range dPC as a PC value comparative example as indicated by a dashed line in Fig. 5, the control section 100 determines that variation in PC values falls within the PC value normal variation range dPC.

The PC value normal variation range dPC is defined as a range of, for example, ±4 meters (m) where variation occurs even when there are only direct waves Sd without any existing indirect waves Sm.

As illustrated in Fig. 3, the terminal 20 stores a Power value evaluating program 122 in the first storage section 110. The Power value evaluating program 122 is a program that the control section 100 determines whether or not variation in P values indicated in the integrating information 158 falls within a predetermined P value normal variation range dP.

The P value normal variation range dP is indicated in P value normal variation range information 164. The P value normal variation range dP is an example of normal variation range. The Power value evaluating program 122 and the control section 100 is an example of the correlation information evaluating means.

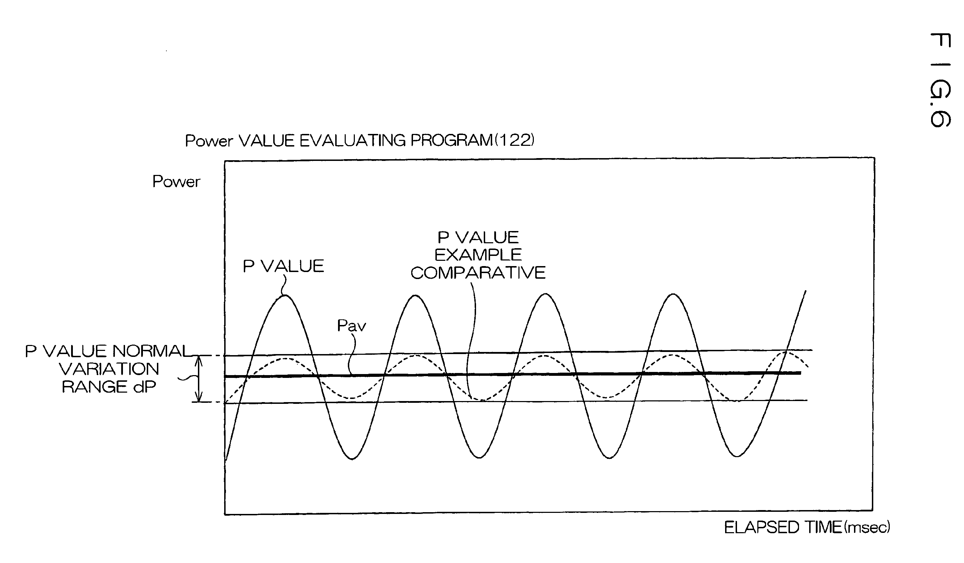

Fig. 6 is a diagram for describing the Power value evaluating program 122.

As illustrated in Fig. 6, the control section 100 determines whether or not variation in P values falls within the P value normal variation range dP. When variation in P values does not fall within the P value normal variation range dP as indicated by a solid line in Fig. 6, the control section 100 determines that variation in P values does not fall within the P value normal variation range dP.

On the other hand, when variation in P values falls within the P value normal variation range dP as a P value comparative example as indicated by a dashed line in Fig. 6, the control section 100 determines that variation in P values falls within the P value normal variation range dP.

The P value normal variation range dP is defined as a range of, for example, ±20 percents (%) where variation occurs even when there are only direct waves Sd without any existing indirect waves Sm.

As illustrated in Fig. 3, the terminal 20 stores a multipath determining program 124 in the first storage section 110. The mutlipath determining program 124 is a program that the control section 100 determines whether or not variation in PC values falls within the PC value normal variation range dPC, and whether or not variation in P values falls within the P value normal variation range dP, thereby determining whether or not the direct waves Sd which are being received are affected by the indirect waves Sm. The multipath determining program 124 and the control section 100 is an example of multipath determining means.

More specifically, the control section 100 evaluates variation in PC values and that in P values, respectively, and determines that the direct waves Sd which are being received are affected by the indirect waves Sm when variation in PC values does not fall within the PC value normal variation range dPC, and variation in P values does not fall within the P value normal variation range dP.

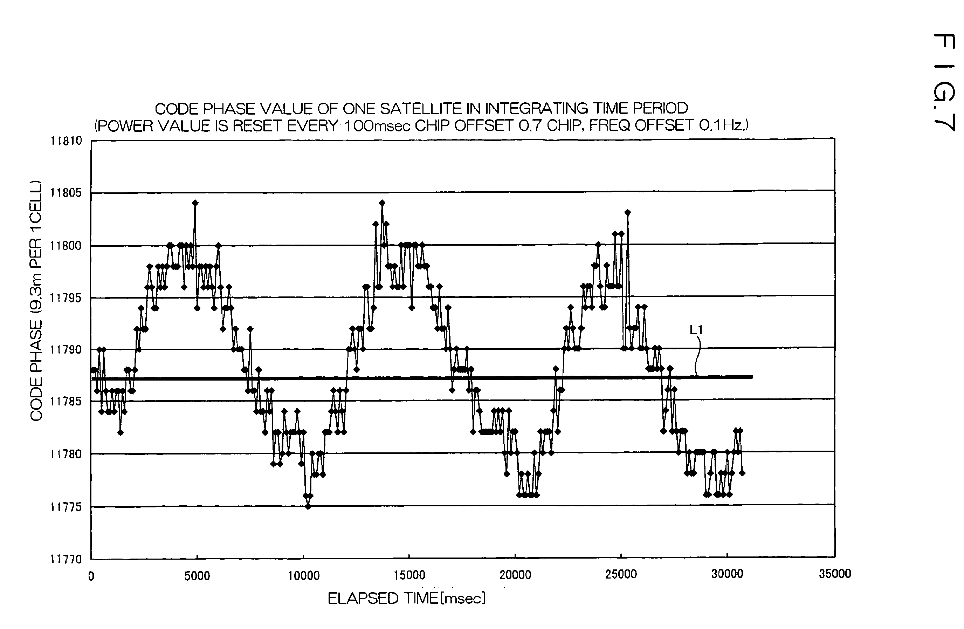

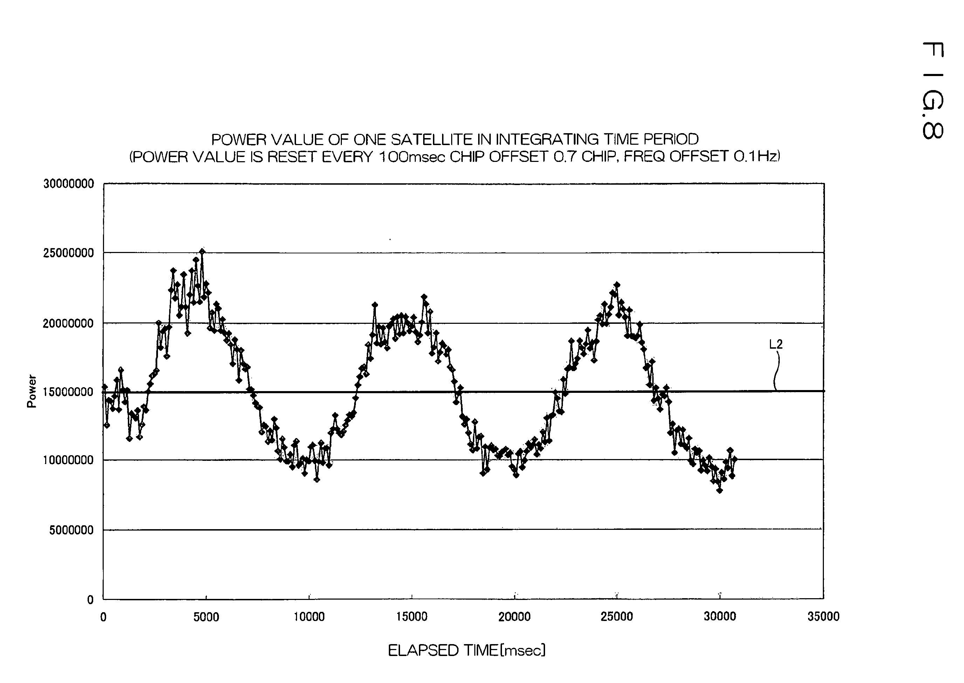

A reason why it is possible to determine whether or not the direct waves Sd are affected by the indirect waves Sm using variation in PC values and that in P values is described forthwith using Figs. 7 and 8.

Fig. 7 illustrates simulation results of variation in PC values when the terminal 20 receives both the direct waves Sd and the indirect waves Sm. In Fig. 7, the indirect waves Sm have an error of 0.7 chips, and a frequency error of 0.1 Hertz (Hz) with respect to the direct waves Sd.

In Fig. 7, the horizontal axis represents integrating time, and the vertical axis represents CodePhase value. The numeric values on the vertical axis represent Cell which is a unit to calculate CodePhase values, and a single Cell corresponds to 9.3 meters.

In Fig. 7, correlation integration is performed and PC values are calculated within 100 msec. In other words, an integrating time period to generate PC1 and the like (see Fig. 4) is set to 100 msec.

As illustrated in Fig. 7, the PC values change in a constant cycle. More specifically, the PC values change every 10 seconds (s) to be the minimum value (hereinafter, referred to as minimum PC value), the maximum PC value (hereinafter, referred to as maximum PC value), and then the minimum PC value.

The maximum PC value and the minimum PC value are almost constant in each cycle.

On the other hand, the PC values, when the terminal 20 receives only the direct waves Sd without any existing indirect waves Sm, are indicated by a straight line L1. In other words, the PC values are fixed when the terminal 20 receives only the direct waves Sd.

The inventor of this invention finds that the PC values change when the terminal 20 receives both the direct waves Sd and the indirect waves Sm through the aforementioned simulation.

As a result, it is possible to determine that the terminal 20 may receive both the direct waves Sd and the indirect waves Sm when the PC values change.

Fig. 8 illustrates simulation results of variation in P values when the terminal 20 receives both the direct waves Sd and the indirect waves Sm. In Fig. 8, as with Fig. 7, the indirect waves Sm have an error of 0.7 chips, and a frequency error of 0.1 Hertz (Hz) with respect to the direct wave Sd.

In Fig. 8, the horizontal axis represents elapsed time, and the vertical axis represents Power value as output electric power value. The numeric values on the vertical axis are units to indicate the output electric power values.

In Fig. 8, as with Fig. 7, P values are calculated every 100 msec.

As illustrated in Fig. 8, the P values change in a constant cycle. More specifically, the P values change every 10 seconds (s) to be the minimum P value (hereinafter, referred to as minimum P value), the maximum P value (hereinafter, referred to as maximum P value), and then the minimum P value.

The maximum P value and minimum P value are almost constant in each cycle.

On the other hand, P values, when the terminal 20 receives only the direct waves Sd without any existing indirect waves Sm, are indicated by a straight line L2. In other words, the P values are fixed when the terminal 20 receives only the direct waves Sd.

The inventor of this invention finds that the P values change when the terminal 20 receives both the direct waves Sd and the indirect waves Sm through the aforementioned simulation.

As a result, it is possible to determine that the terminal 20 may receive both the direct waves Sd and the indirect waves Sm when the P values change.

As described above, it is possible to determine that the terminal 20 may receive both the direct waves Sd and the indirect waves Sm when the PC values change.

In addition, it is possible to determine that the terminal 20 may receive both the direct waves Sd and the indirect waves Sm when the P values change.

However, in the actual environment, either PC values or P values may change despite that the terminal 20 receives only the direct waves Sd.

Therefore, the terminal 20 evaluates both variation in PC values and that in P values.

In addition, in the actual environment, there are cases where either PC values or P values are not completely constant regardless that the terminal 20 receives only the direct waves Sd.

Therefore, the control section 100 of the terminal 20 determines that the direct waves Sd which are being received are affected by the indirect waves Sm when variation in PC values does not fall within the PC value normal variation range dPC, and variation in P values does not fall within the P value normal variation range dP.

Here, variation in PC values and P values can be calculated even when the output waveforms of the PC values and P values are round. This allows increase in the sensitivity (S/N ratio) by reducing the bandwidth for reception, even if the radio wave intensity of radio waves S1 and the like is weak.

As illustrated in Fig. 3, the terminal 20 stores an interference cycle information generating program 126 in the first storage section 110. The interference cycle information generating program 126 is a program that the control section 100 determines an interference cycle dA at which the indirect waves Sm interfere with the direct waves Sd, and then generates interference cycle information 166 which indicates the interference cycle dA. The interference cycle information generating program 126 and the control section 100 is an example of interference cycle determining means.

More specifically, the control section 100 refers to the PC value information 159 or the P value information 160 indicated in the integrating information 158, and then determines the time between the time corresponding to the minimum PC value and the time corresponding to the maximum PC value as the interference cycle dA.

The control section 100 stores the generated interference cycle information 166 in the second storage section 150.

The invention is not limited to this embodiment, the time between the time corresponding to the minimum PC value and the time corresponding to the next minimum PC value after the time corresponding to the maximum PC value has elapsed may be defined as the interference cycle dA.

As illustrated in Fig. 3, the terminal 20 stores an expected line generating program 128 in the first storage section 110. The expected line generating program 128 is a program that the control section 100 generates expected line information 168 which indicates an expected line Lp based on the PC value information 159 in the interference cycle dA.

More specifically, when determining that the direct wave Sd is affected by the indirect wave Sm using the aforementioned multipath determining program 124, the control section 100 refers to the PC value information 159 and then generates the expected line Lp which is defined by an average value PCav between the maximum PC value and the minimum PC value in the interference cycle dA. The expected line Lp is information for correcting effects of the indirect waves Sm, and is an example of multipath correcting information. The expected line generating program 128 and the control section 100 is an example of multipath correcting information generating means.

It should be noted that the average value PCav is also called an expected PC value.

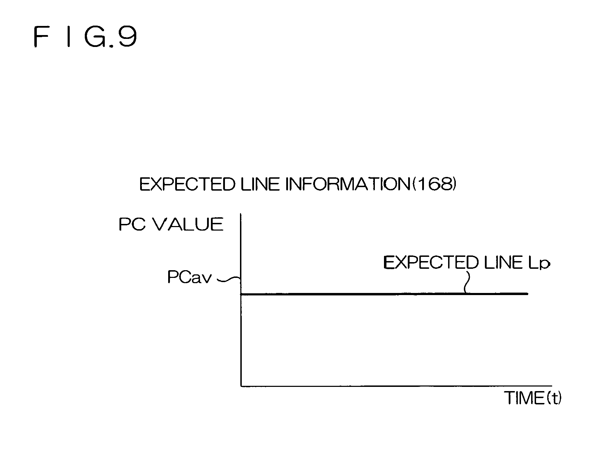

Fig. 9 illustrates an example of the expected line information 168.

As illustrated in Fig. 9, in a graph of the expected line information 168, with the horizontal axis representing time t and the vertical axis representing PC value, an average value Pav between the maximum PC value and the minimum PC value forms an expected line Lp which extends along the direction of time.

The control section 100 stores the generated expected line information 168 in the second storage section 150.

The control section 100 measures the time at which the expected line information 168 is generated based on the expected line generating program 128, and then generates expected line generating time information 170 which indicates the time and stores it in the second storage section 150.

As illustrated in Fig. 3, the terminal 20 stores a positioning use PC value deciding program 130 in the first storage section 110. The positioning use PC value deciding program 130 is a program that the control section 100 determines which is used for positioning either the expected PC value Pav or the currently observed PC value (hereinafter, referred to as observed PC value).

The control section 100 determines to use the observed PC value for positioning if deviation in the observed PC value from Pav falls within a predetermined observed PC value deviation allowable range dG. This is because if deviation in the observed PC value from the expected PC value Pav falls within the predetermined observed PC value deviation allowable range dG, it can be considered that the observed PC value which is new information has higher reliability, and thus a positioning position closer to a true position can be calculated. It should be noted that the observed PC value deviation allowable range dG is indicated in observed PC value allowable range information 172 stored in the second storage section 150.

On the other hand, the control section 100 determines to use the expected PC value Pav for positioning if deviation between the currently observed PC value and the expected PC value Pav does not fall within the predetermined observed PC value deviation allowable range dG.

As described above, the control section 100 corrects the currently observed PC value to the expected PC value Pav in a certain case, based on the positioning use PC value deciding program 130. The positioning use PC value deciding program 130 and the control section 100 is an example of correlation value correcting program.

As illustrated in Fig. 3, the terminal 20 stores a positioning program 132 in the first storage section 110. The positioning program 132 is a program that the control section 100 calculates the positioning position Q based on the PC value determined by the aforementioned positioning use PC value deciding program 130, and then generates positioning position information 174 which indicates the positioning position Q.

The control section 100 stores the generated positioning position information 174 in the second storage section 150.

As illustrated in Fig. 3, the terminal 20 stores a positioning position information outputting program 134 in the first storage section 110. The positioning position information outputting program 134 is a program that the control section 100 displays the positioning position information 174 on the display apparatus 36 (see Fig. 2).

The terminal 20 is configured as described above.

As described above, the terminal 20 can determine whether or not the direct waves Sd are affected by the indirect waves Sm, which are multipaths, by determining whether or not variation in PC values and that in P values fall within the predetermined range, respectively.

In addition, the terminal 20 can generate the expected line information 168, and correct the currently observed PC value to the PC value Pav indicated in the expected line information 168.

The terminal 20 can determine whether or not variation in the PC values falls within the PC value normal variation range dPC, and whether or not variation in the P values falls within the P value normal variation range dP even when the signal waveforms of the PC values and P values are round, allowing increase in the sensitivity by reducing the bandwidth even when both the radio wave intensity and the signal intensity are weak.

Accordingly, it is possible to determine a multipath even when signal intensity is weak, and it is also possible to correct the multipath.

In addition, the terminal 20 evaluates variation in the PC values and that in the P values, respectively, and then determines that the direct waves Sd are affected by a multipath when variation in the PC values does not fall within the PC value normal variation range dPC (see Fig. 3), and variation in the P values does not fall within the P value normal variation range (see Fig. 3). This allows the terminal 20 to reliably determine whether or not the direct waves Sd are affected by a multipath.

Furthermore, the terminal 20 generates the expected line information 168 based on the PC value information 159 in the interference cycle dA (see Fig. 3), allowing generation of the expected line information 168 for sufficient time periods.

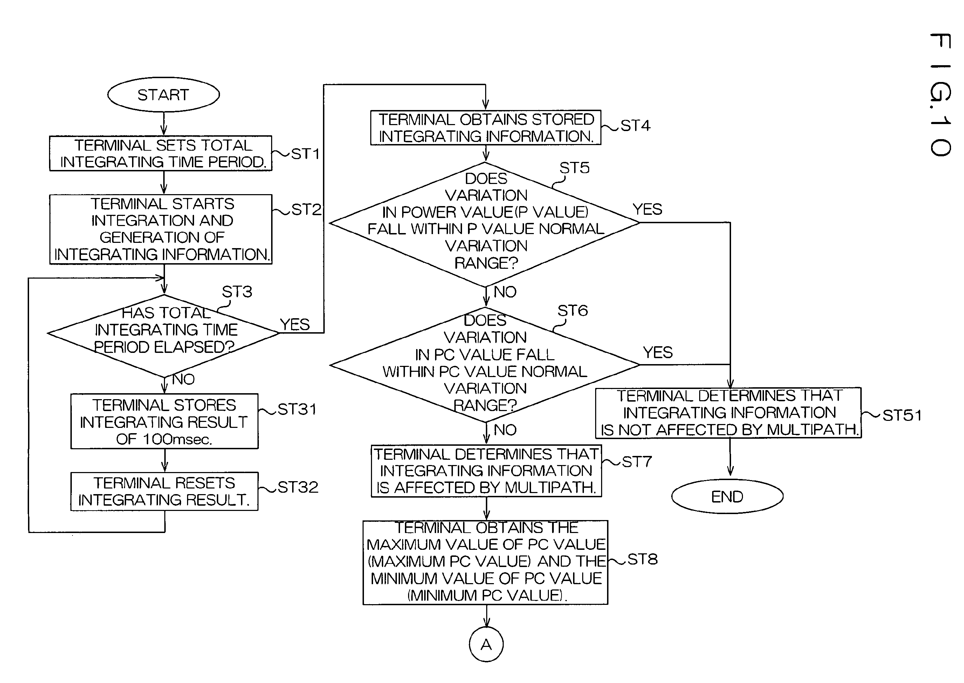

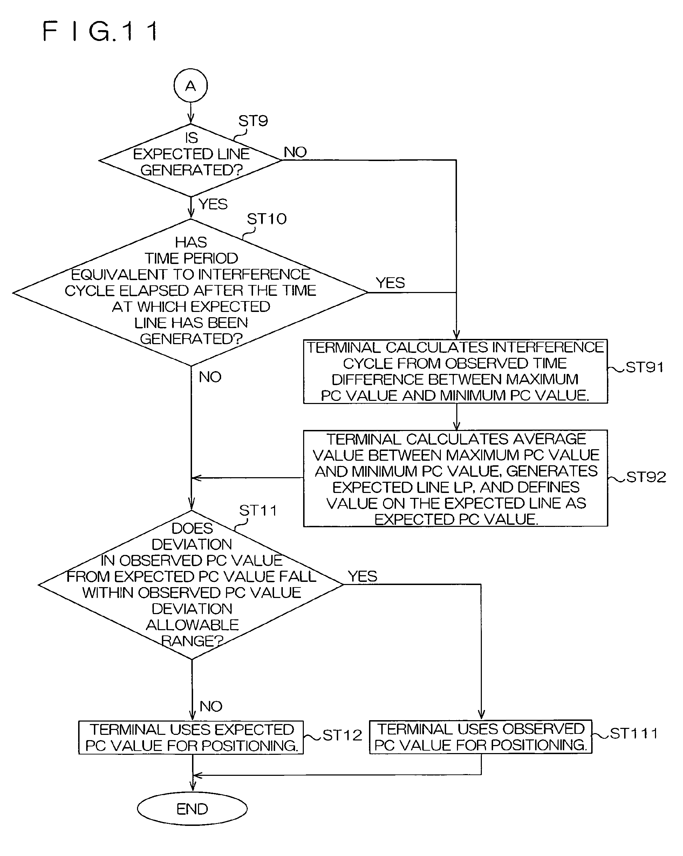

The structure of the terminal 20 is described above. An operation example of the terminal 20 is described forthwith mainly using Figs. 10 and 11.

Figs. 10 and 11 schematically illustrate flowcharts of an operation example of the terminal 20.

In the following description, it is assumed that the terminal 20 receives both the direct waves Sd and the indirect waves Sm, variation in the PC values does not fall within the PC value normal variation range dPC, and variation in the P values does not fall within the P value normal variation range dP.

First, the terminal 20 sets the total integrating time period tmax (see Fig. 3) (step ST1 in Fig. 10).

The terminal 20 then starts integration of correlation values (step ST2). In other words, the terminal 20 starts generation of the integrating information 158. The step ST2 is an example of the step of generating correlation information.

Subsequently, the terminal 20 determines whether or not the total integrating time period tmax has elapsed after integration has started (step ST3). In step ST3, when determining that the total integrating time period tmax has not elapsedafterintegrationhas started, the terminal 20 stores integrating results of 100 msec as PC values and P values which configure the integrating information 158 (step ST31), and then resets the integrating results (step ST32).

In step ST3, when determining that the total integrating time period tmax has elapsed after integration has started, the terminal 20 obtains the stored integrating information 158 (step ST4).

Next, the terminal 20 determines whether or not variation in the P values falls within the P value normal variation range dP (step ST5). Since it is assumed that variation in the P values does not fall within the P value normal variation range dP as described above, the terminal 20 determines that variation in the P values does not fall within the P value normal variation range dP, and then proceeds to step ST6.

In step ST6, the terminal 20 determines whether or not variation in the PC values falls within the PC value normal variation range dPC (step ST6). Since it is assumed that variation in the PC values does not fall within the PC value normal variation range dPC as described above, the terminal 20 thus determines that variation in the PC values does not fall within the PC value normal variation range dPC, and then proceeds to step ST7.

The aforementioned steps ST5 and ST6 is an example of the step of evaluating correlation information.

In step ST7, the terminal 20 determines that the direct wave Sd is affected by a multipath. The step ST7 is an example of the step of determining multipath.

Afterwards, the terminal 20 obtains the maximum PC value and the minimum PC value (step ST8).

The terminal 20 then determines whether or not the expected line Lp is generated (step ST9 in Fig. 11).

When the expected line Lp is not generated, the terminal 20 calculates the interference cycle dA from the observed time difference between the maximum PC value and the minimum PC value (step ST91).

Subsequently, the terminal 20 calculates the average value between the maximum PC value and the minimum PC value, generates the expected line Lp, and then defines a value on the expected line Lp as the expected PC value (step ST92).

The aforementioned steps ST91 and ST92 is an example of the step of generating multipath correcting information.

Next, the terminal 20 determines whether or not the observed PC value which is being observed falls within the observed PC value deviation allowable range dG (step ST11).

In step ST11, when determining that the observed PC value which is being observed does not fall within the observed PC value deviation allowable range dG, the terminal 20 uses the expected PC value for positioning (step ST12). The aforementioned steps ST11 and ST12 is an example of the step of correcting correlation values.

On the other hand, in step ST11, when determining that the observed PC value which is being observed falls within the observing PC value deviation allowable range dG, the terminal 20 uses the expected PC value for positioning (step ST111).

It should be noted that when determining that variation in the P values falls within the P value normal variation range dP in the aforementioned step ST5 (see Fig. 10), or when determining that variation in the PC values falls within the PC value normal variation range dPC in the aforementionedstepST6 (see Fig. 10), the terminal 20 determines that direct wave Sd is not affected by a multipath. The step ST51 is also an example of the step of determining multipath. It should be noted that the terminal 20 positions and outputs a positioning position under the condition where there is no effects of multipath following the step ST51.

In addition, when determining that the expected line Lp is generated in the aforementioned step ST10 (see Fig. 11), the terminal 20 determines whether or not the time period equivalent to the interference cycle dA has elapsed after the time at which the expected line Lp was generated (step ST10). When determining that the time equivalent to the interference cycle dA has elapsed after the time at which the expected line Lp has been generated, the terminal 20 generates a new expected line Lp in steps ST91 and ST92.

On the other hand, when the terminal 20 determines that the time period equivalent to the interference cycle dA does not have elapsed after the time at which the expected line Lp has been generated, the process proceeds to step ST11. As a result, the newest expected line Lp can always be used.

The aforementioned steps allow determination of multipath even when signal intensity is weak, and correction of the multipath.

Program and Computer Readable Recording Medium and the like
It is possible to provide a control program for a positioning apparatus, instructing a computer to perform the steps of generating correlation information, evaluating correlation information, determining multipath, generating multipath correcting information, correcting correlation values, and the like of the above-mentioned operation example.

It is also possible to provide a computer readable recording medium and the like on which such control program and the like for the positioning apparatus are recorded.

A program storing medium used to install such control program and the like for the positioning apparatus on the computer, and enable them to be performed by the computer may be not only a package medium such as a flexible disc such as a floppy(R), a CD-ROM (Compact Disc Read Only Memory), a CD-R (Compact Disc Recordable), a CD-RW (Compact Disc-Rewritable), a DVD (Digital Versatile Disc) or the like, but also a semiconductor memory, a magnetic disc, or a magnetic optical disc in which a program is temporarily or permanently stored.

The present invention is not limited to the above-described respective embodiments. Further, the above-described respective embodiments may be combined with each other.

## Claims

1. A positioning apparatus for positioning based on satellite signals from positioning satellites, comprising:
correlation information generating means for generating correlation information which indicates correlation values between the satellite signals and correlation purpose signals stored in the positioning apparatus;
correlation information evaluating means for determining whether or not variation in the correlation values falls within a predetermined normal variation range;
multipath determining means for determining whether or not the satellite signals are affected by a multipath based on determination results of the correlation information evaluating means;
multipath correcting information generating means for generating multipath correcting information to correct effects of the multipath based on determination results of the multipath determining means and the correlation information; and
correlation value correcting means for correcting the correlation values based on the multipath correcting information.

2. The positioning apparatus according to claim 1, wherein
the correlation values include code phase values and peak electric power values, and
the multipath determining means evaluates variation in the code phase values and that in the peak electric power values, respectively, and determines that the satellite signals are affected by a multipath when both of the code phase values and the peak electric power values do not fall within the normal variation range.

3. The positioning apparatus according to claim 1 or claim 2, comprising:
interference cycle determining means for determining an interference cycle in which the multipath interferes with the satellite signals, wherein
the multipath correcting information generating means generates the multipath correcting information based on the correlation information in the interference cycle.

4. A control method of a positioning apparatus, comprising the steps of:
generating correlation information which indicates correlation values between satellite signals and correlation purpose signals stored in a positioning apparatus by means of the positioning apparatus for positioning based on the satellite signals from positioning satellites;
evaluating correlation information for determining whether or not variation in the correlation values falls within a predetermined normal variation range by means of the positioning apparatus;
determining multipath for determining whether or not the satellite signals are affected by a multipath by means of the positioning apparatus based on determination results of the step of evaluating correlation information;
generating multipath correcting information to correct effects of the multipath by means of the positioning apparatus based on determination results of the multipath determining means and the correlation information; and
correcting correlation values for correcting the correlation values by means of the positioning apparatus based on the multipath correcting information.

5. A control program for a positioning apparatus, instructing a computer to perform the steps of:
generating correlation information which indicates correlation values between satellite signals and correlation purpose signals stored in a positioning apparatus by means of the positioning apparatus for positioning based on the satellite signals from positioning satellites;
evaluating correlation information for determining whether or not variation in the correlation values falls within a predetermined normal variation range by means of the positioning apparatus;
determining multipath for determining whether or not the satellite signals are affected by a multipath by means of the positioning apparatus based on determination results of the step of evaluating correlation information;
generating multipath correcting information to correct effects of the multipath by means of the positioning apparatus based on determination results of the multipath determining means and the correlation information; and
correcting correlation values for correcting the correlation values by means of the positioning apparatus based on the multipath correcting information.

6. A computer readable recording medium for storing a control program for a positioning apparatus, instructing a computer to perform the steps of:
generating correlation information which indicates correlation values between satellite signals and correlation purpose signals stored in a positioning apparatus by means of the positioning apparatus for positioning based on the satellite signals from positioning satellites;
evaluating correlation information for determining whether or not variation in the correlation values falls within a predetermined normal variation range by means of the positioning apparatus;
determining multipath for determining whether or not the satellite signals are affected by a multipath by means of the positioning apparatus based on determination results of the step of evaluating correlation information;
generating multipath correcting information to correct effects of the multipath by means of the positioning apparatus based on determination results of the multipath determining means and the correlation information; and
correcting correlation values for correcting the correlation values by means of the positioning apparatus based on the multipath correcting information.
